Europäisches Patentamt

European Patent Office

Office européen des brevets

(19)

(11) Veröffentlichungsnummer : **0 103 275 B1**

(12) **EUROPÄISCHE PATENTSCHRIFT**

(45) Veröffentlichungstag der Patentschrift : 16.04.86

(21) Anmeldenummer : 83108868.7

(22) Anmeldetag : 08.09.83

(51) Int. Cl.⁴ : **C 08 G 65/46**

(54) Verfahren zur Entfernung des Katalysators aus Polyphenylenethern.

(30) Priorität : **14.09.82 DE 3234035**

(43) Veröffentlichungstag der Anmeldung :
**21.03.84 Patentblatt 84/12**

(45) Bekanntmachung des Hinweises auf die Patenterteilung : **16.04.86 Patentblatt 86/16**

(84) Benannte Vertragsstaaten :
**BE DE FR GB NL**

(56) Entgegenhaltungen :
**EP-A- 0 081 140
DE-A- 2 364 319
DE-A- 2 460 325
DE-A- 3 140 026
US-A- 4 026 870**

(73) Patentinhaber : **BASF Aktiengesellschaft
Carl-Bosch-Strasse 38
D-6700 Ludwigshafen (DE)**

(72) Erfinder : **Hambrecht, Juergen, Dr.
Werderstrasse 30
D-6900 Heidelberg (DE)**
Erfinder : **Reffert, Rudi Wilhelm
Berliner Strasse 18
D-6711 Beindersheim (DE)**
Erfinder : **Echte, Adolf, Dr.
Leuschnerstrasse 42
D-6700 Ludwigshafen (DE)**
Erfinder : **Swoboda, Johann, Dr.
Neuwiesenstrasse 28
D-6700 Ludwigshafen (DE)**

## Beschreibung

Die Erfindung betrifft ein Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50 °C in Anwesenheit eines Katalysatorkomplexes aus einem Kupfersalz und einem organischen Amin in Gegenwart eines Lösungsmittels im Bereich von 1 : 1 bis 20 : 1 Gew.-Teilen, bezogen auf das monomere Phenol, und gegebenenfalls eines Aktivators und Abtrennen der Metallkomponente des Katalysatorkomplexes aus der Reaktionsmischung.

Polyphenylenether und Verfahren zu ihrer Herstellung sind allgemein bekannt und vielfach beschrieben, wie beispielsweise in den US-Patentschriften 3 306 874, 3 306 875, 3 639 656, 3 642 699 und 3 661 848, deren Offenbarungsgehalt in die vorliegende Anmeldung aufgenommen wird.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z. B. in der DE-OS 21 05 372 im Gegenstromextraktionsverfahren vorgenommen wird. Verwendet werden auch Polyaminocarbonsäuren (s. DE-OS 23 64 319) oder andere Chelatisierungsmittel wie Nitrilotriessigsäure und ihre Natriumsalze oder Ethylendiamintetraessigsäure und ihre Natriumsalze (s. DE-OS 25 32 477), letztere auch in Kombination mit quartären Ammoniumsalzen (US-PS 4 026 870). Beschrieben wird auch die Katalysatorabtrennung mit Hilfe komplexbildender Mittel aus der Gruppe des Bisguanids (s. DE-OS 24 60 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Alle bisherigen Maßnahmen zur Entfernung von Katalysatorresten haben den Nachteil, daß zu einer vollständigen Entfernung (Restmenge des Metallions ⩽ 10 ppm) mehrfache Extraktionsschritte bei z. T. komplizierten Trennverfahren angewendet werden müssen. Dabei wird häufig der Charakter des Polyphenylenethers verändert, insbesondere Verfärbungen und Gelbbildung sind zu beobachten.

Der Erfindung lag deshalb die Aufgabe zugrunde, ein einfaches und hochwirksames Verfahren zur Abtrennung der Katalysatorreste bei der Selbstkondensation einwertiger Phenole in Gegenwart von Sauerstoff zu entwickeln.

Diese Aufgabe wird erfindungsgemäß dadurch gelöst, daß die Metallionkomponente des Katalysators nach der Polymerisation durch Zugabe eines Natriumdiphosphats, Natriumtriphosphats, Natriumhexametaphosphats oder Natriumhydroxyethandiphosphonats abgetrennt wird. Insbesondere werden die obigen Verbindungen in Form von 1 gew.%igen bis gesättigten wäßrigen Lösungen eingesetzt.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemäßen Polymeren weisen Molekulargewichte von 10.000 bis 90.000, bevorzugt 20.000 bis 80.000, bestimmt nach der in « Macromolecular Synthesis » 1 (1978), Seite 83 angegebenen Methode, auf. Hochmolekulare Polyphenylenether, auch Poly(phenylenoxide) genannt, sind an sich aus der Literatur seit längerem bekannt (vgl. z. B. US-PS 3 661 848 ; US-PS 319 625 oder US-PS 3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Di-ethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 15 bis 50 °C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach einem bevorzugten Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z. B. n-Dibutylamin, Diethylamin, Picolin, Chinolin, Pyridinbasen, Triisopropylamin, Dimethylisopropanolamin, Triethanolamin, Triisopropanolamin oder Di-isopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1 : 1 bis 20 : 1, d. h., maximal bis zu einem Überschuß des 20-fachen am Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Beim vorliegenden Verfahren wird die Polykondensationsreaktion bei Temperaturen zwischen 15 und 50, vorzugsweise 18 und 22 °C durchgeführt. Hierzu wird der Sauerstoff in die 15 bis 50 °C warme Lösung des Monomeren in Gegenwart des Aminkomplexes eingeleitet. Die Reaktion ist in kurzer Zeit beendet, d. h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Mengen anderer Materialien. Diese Reaktionslösungen werden erfindungsgemäß mit den komplex- und salzbildenden Polyphosphaten und anorganischen Phosphaten oder Phosphonaten zur Abtrennung des im Polymeren enthaltenen Metallkatalysators behandelt. Die Art und Weise der Zugabe der Phosphate oder Phosphonate ist dabei unkritisch. So können die Phosphate bzw. Phosphonate in Substanz ebenso wie in wäßriger Lösung und in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Zur Vereinfachung der Ausführungsform ist es vorteilhaft, wäßrige Lösungen einzusetzen. Die Separierung der Metallkomponente kann dabei in geeigneten Verfahrensvorrichtungen wie z. B. in Dekantationstanks, Zentrifugen und ähnlichem vorgenommen werden.

Die Kontaktzeit des komplex- und salzbildenden Agens mit der katalysatorhaltigen Polyphenylenether-Phase kann innerhalb weiter Grenzen variieren. Bevorzugt werden Reaktionszeiten von 1 Minute bis 2 Stunden. Häufig genügen Reaktionszeiten von 5 bis 60 Minuten. Die bevorzugte Reaktionstemperatur liegt zwischen 25 °C und 90 °C, es sind jedoch auch Temperaturbereiche darunter und darüber anwendbar.

Es werden erfindungsgemäß als Phosphate oder Phosphonate Verbindungen vom Typ des Natriumdiphosphats, Natriumtriphosphats, Natriumhexametaphosphats und/oder Natriumhydroxyethanphosphonats eingesetzt. Ganz besonders geeignet ist der Einsatz von Natriumtriphosphat und Natriumhexametaphosphat.

Die komplex- und salzbildenden Phosphate bzw. Phosphonate werden im besonderen in solchen Mengen eingesetzt, daß mindestens 0,5 Mol Phosphatgruppe bzw. Phosphonatgruppe auf 1 Mol des zu entfernenden Metallions entfällt. Im allgemeinen werden je Äquivalent Schwermetallion 1,2 bis 100 Äquivalente Phosphatgruppe bzw. Phosphonatgruppe verwendet. Besonders bevorzugt werden 1,5 bis 50 Äquivalente Phosphatgruppen bzw. Phosphonatgruppen eingesetzt.

Die Abtrennung der Metallkatalysatoren bis zur vollständigen Entfernung aus dem Polyphenylenether-Polymeren kann durch mehrfache Zugabe der erfindungsgemäßen Phosphate bzw. Phosphonate und anschließende Separierung der resultierenden Metallkomplexe und Metallsalze gemäß den bereits beschriebenen Verfahren erfolgen. Bevorzugt wird jedoch eine Ausführungsform der Erfindung, wonach die gesamte Katalysatormenge in einem Schritt aus dem Polymeren entfernt wird.

Zusätzlich zur Katalysatorabtrennung können zu einer Stabilisierung der Polyphenylenether gegen Molekulargewichtsabbau die organischen Lösungen der Polyphenylenether mit Reduktionsmitteln sowie zweiwertigen Phenolen und/oder Reduktonen behandelt werden. Dies ist insbesondere dann angezeigt, wenn die Polyphenylenetherlösungen über längere Zeit Temperaturbelastungen > 100 °C ausgesetzt sind.

Nach der Entfernung der metallischen Komponente als Komplex und/oder Salz kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z. B. der Polyphenylenether durch Ausfällen aus einer Reaktionslösung mittels einem Antilösungsmittel, wie beispielsweise einem Überschuß von einem Alkohol, d. h. Methanol, isoliert werden. Das filtrierte Produkt kann in Alkohol aufgeschlämmt und — falls gewünscht — mit einem Entfärbungsmittel gerührt werden und dann wird der Polyphenylenether abfiltriert und nach herkömmlichen Verfahren in Filme, Fasern, ausgeformte Gegenstände dgl. umgewandelt. Andere Alkohole wie Isopropanol, Propanol oder Ethanol sind in gleicher Weise verwendbar.

Die Aminkomponente des Katalysators kann durch Destillation oder nach anderen herkömmlichen Verfahren zurückgewonnen werden.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z. B. durch Sprühtrocknung, Dampfausfällung und Heißwasserzerkrümelung, gewonnen werden können. Die erleichtert die wirtschaftliche Anwendung solcher Verfahren, die hinsichtlich der erforderlichen Energie, der Lösungsmittelverluste u. dgl. wirtschaftlicher sind als die bekannten Ausfällungsverfahren.

Die mit der Erfindung erzielten Vorteile bestehen insbesondere darin, daß mit Hilfe der Polyphosphate und/oder Polyphosphonate die Metallkatalysator-Reste aus den Polyphenylenethern nahezu vollständig entfernt werden können. Die resultierenden Polyphenylenether enthalten bei einem einfachen Extraktionsschnitt Rest-Katalysatormetall-Gehalte von ≤ 10 ppm und besitzen dadurch eine hohe Farb- und Oxidationsstabilität auch bei Verarbeitungstemperaturen die über 250 °C liegen. Durch die einfache und einstufige Katalysatorabtrennung wird auch eine Veränderung des Charakters des Polyphenylenethers in der oben angesprochenen Weise vermieden.

Die folgenden Beispiele dienen dazu, die Erfindung zu illustrieren, ohne daß damit eine Begrenzung der Erfindung beabsichtigt ist. Die angegebenen Teile sind Gewichtsteile, es sei denn, es ist anders angegeben.

Die Intrinsikviskosität wird durch Messung an 0,5 %igen Lösungen in Chloroform bei 30 °C bestimmt.

## Beispiel 1

Herstellung von Poly-(2,6-dimethyl-1,4-phenylen)-ether

Eine Vorlage von 1,3 g Cu-I-Bromid und 20 g 1,4-Dimethylpentylamin und 2 g 2,6-Dimethylphenol (= DMP) wird bei 20 °C 5 Minuten unter Einleiten von Sauerstoff gerührt, und dann wird im Verlauf von 30 Minuten eine Lösung von 204 g DMP in 1 400 ml Toluol eindosiert. Anschließend wird noch 1 Stunde bei 20 °C gerührt. Die Reaktion wird in Gegenwart von 30 Liter Sauerstoff pro Stunde durchgeführt.

Reinigung der Reaktionslösung

Nach Beendigung der Reaktion wird die Polymerlösung mit 180 ml einer 10 %igen wäßrigen Natriumdiphosphatlösung in Wasser 10 Minuten bei 50 °C unter starkem Rühren versetzt. Anschließend werden die organische und die wäßrige Phase nach einer vollständigen Phasentrennung getrennt und das Polyphenylenoxid aus der organischen Phase durch Zugabe von Methanol ausgefällt. Nach dem Trocknen wies das feste Polyphenylenoxid die in Tabelle 1 aufgeführten Eigenschaften auf.

## Beispiel 2

Herstellung des Poly-(2,6-dimethyl-1,4-phenylen)-ethers

Eine Lösung von 1,2 g Cu-II-chlorid, 1,9 g Natriumbromid und 0,3 g Methyltrioctylammoniumchlorid in 15 ml Methanol werden zu 1 100 ml Ethylbenzol hinzugegeben und bei 40 °C gerührt. Anschließend gibt man 14 g Di-n-butylamin und eine Lösung von 275 g 2,6-Dimethylphenol in 400 ml Ethylbenzol hinzu und begast die Reaktionslösung mit 0,1 m³ Sauerstoff pro Stunde während 90 Minuten. Danach wird die Sauerstoffzufuhr abgedreht und das Reaktionsgefäß mit Stickstoff gespült.

Reinigung der Reaktionslösung

Nach Beendigung der Reaktion wird die Polymerlösung mit 70 ml einer 10 %igen Natriumtriphosphatlösung in Wasser bei 60 °C 10 Minuten unter starkem Rühren versetzt.

Nach der Phasentrennung wird das Polymerisat aus der organischen Phase durch Zugabe von Methanol ausgefällt, gewaschen und getrocknet. Die Eigenschaften des Polyphenylenethers sind in Tabelle 1 aufgeführt.

## Beispiel 3

Die Herstellung des Poly-(2,6-dimethyl-1,4-phenylen)-ethers erfolgt wie in Beispiel 1 beschrieben. Die Reinigung der Polymerlösung wird ebenfalls wie in Beispiel 1 durchgeführt mit dem Unterschied, daß 330 ml einer 2 %igen wäßrigen Lösung von Natriumtriphosphat verwendet wurden. Eigenschaften des Polymeren s. Tabelle 1.

## Beispiel 4

Herstellung des Poly-(2,6-dimethyl-1,4-phenylen)-ethers und die Katalysatorabtrennung erfolgten wie in Beispiel 1 beschrieben, mit dem Unterschied, daß die Metallkomponente mit 100 ml einer 4 %igen wäßrigen Lösung von Natriumhexametaphosphat abgetrennt wurde. Eigenschaften des Polymeren s. Tabelle 1.

## Beispiel 5

Herstellung des Poly-(2,6-dimethyl-1,4-phenylen)-ethers und Katalysatorabtrennung erfolgten wie in Beispiel 2 beschrieben. Es wurden jedoch 120 ml einer 2 %igen wäßrigen Lösung des Dinatriumsalzes der Hydroxyethandiphosphonsäure zur Katalysatorabtrennung verwendet.

# 0 103 275

## Beispiel 6

Herstellung des Poly-(2,6-dimethyl-1,4-phenylen)-ethers und die Katalysatorabtrennung erfolgten wie im Beispiel 3 beschrieben. Nach der Zugabe der wäßrigen Lösung des Natriumtriphosphats wurden jedoch noch 11 ml einer 10 %igen Ascorbinsäurelösung zur Stabilisierung des Polyphenylethers gegen thermischen Abbau hinzugegeben und weitere 10 Minuten stark gerührt. Die Aufarbeitung erfolgte wie in Beispiel 1. Eigenschaften des Polymeren s. Tabelle 1.

## Beispiel 7

Herstellung des Poly-(2,6-dimethyl-1,4-phenylen)-ethers und die Katalysatorabtrennung erfolgten wie in Beispiel 3 beschrieben. Zur Stabilisierung des Polyphenylenethers gegen thermischen Abbau wurden jedoch noch 0,3 g Hydrochinon und 3 g Natriumdithionit hinzugegeben und 10' bei 75 °C gerührt. Die Aufarbeitung erfolgte wie in Beispiel 3. Eigenschaften des Polymeren s. Tabelle 1.

## Vergleichsbeispiel A (nicht erfindungsgemäß)

Die Herstellung des Polyphenylenoxids erfolgte wie in Beispiel 1 beschrieben. Zur Reinigung der Polymerlösung wurden 4,0 g Ethylendiamintetraessigsäure (vgl. Beispiel 1 DE-OS 2 364 319) hinzugegeben und die Polymerlösung eine weitere Stunde bei 50 °C gerührt. Die Polymerlösung wurde zentrifugiert und die organische Phase abgetrennt. Das Polymere wurde durch Zugabe von Methanol ausgefällt. Nach dem Trocknen ergaben sich für das Polyphenylenoxid die in Tabelle 1 angegebenen Zahlen.

## Vergleichsbeispiel B (nicht erfindungsgemäß)

Die Herstellung des Poly-(2,6-dimethyl-1,4-phenylen)-ethers erfolgt wie in Beispiel 2 beschrieben. Die Reinigung der Polymerlösung von verbliebenem Metallkatalysator wurde mit Di-o-tolyl-bisguanid vorgenommen. Hierzu wurden 4,0 g Di-o-tolyl-bisguanid zu der Reaktionsmischung hinzugegeben (vgl. Beispiel 1 DE-OS 2 460 325) und 30 Minuten bei 40 °C gerührt. Anschließend wurde das Polymere unter Ansäuern und Abdekantieren der organischen Phase mit Methanol ausgefällt. Das resultierende Polyphenylenoxid hatte die in Tabelle 1 angegebenen Eigenschaften.

## Vergleichsbeispiel C (nicht erfindungsgemäß)

Die Herstellung des Polyphenylenethers und die Katalysatorabtrennung erfolgte wie in Beispiel A beschrieben. Zur Stabilisierung des Polyphenylenethers gegen Molekulargewichtsabbau wurde die Polymerlösung nach Zugabe des Katalysatorabtrennmittels mit 6,5 g Hydrochinon und 1 g Natriumsulfit (vgl. Beispiel 1 DE-OS 2 754 887) bei 60 °C 10 min unter heftigem Rühren umgesetzt. Die Aufarbeitung erfolgte wie im Vergleichsbeispiel A beschrieben. Eigenschaften des Polymeren s. Tabelle 1.

### Tabelle 1

| Beispiel | Grenzviskosität (dl/g) | | Rest–Cu–Ge-halt ppm |
|---|---|---|---|
| | nach Reaktionsende | nach Temperaturlagerung 60', 80°C | |
| 1 | 0,82 | 0,75 | 9 |
| 2 | 0,61 | 0,58 | 4 |
| 3 | 0,81 | 0,77 | 3 |
| 4 | 0,78 | 0,73 | 8 |
| 5 | 0,65 | 0,58 | 5 |
| 6 | 0,84 | 0,86 | 4 |
| 7 | 0,80 | 0,76 | 9 |
| Vergleichsbeispiele (nicht erfindungsgemäß) | | | |
| A | 0,82 | 0,69 | 16 |
| B | 0,60 | 0,52 | 21 |
| C | 0,80 | 0,78 | 15 |

**Patentansprüche**

1. Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50 °C in Anwesenheit eines Katalysatorkomplexes aus einem Kupfersalz und einem organischen Amin in Gegenwart eines Lösungsmittels im Bereich von 1 : 1 bis 20 : 1 Gew.-Teilen, bezogen auf das monomere Phenol, und gegebenenfalls eines Aktivators und Abtrennen der metallkomponente des Katalysatorkomplexes aus der Reaktionsmischung, dadurch gekennzeichnet, daß die Metallkomponente des Katalysators nach der Polymerisation durch Zugabe eines Natriumdiphosphats, Natriumtriphosphats, Natriumhexametaphosphats oder Natriumhydroxyethandiphosphonats abgetrennt wird.

2. Verfahren gemäß Anspruch 1, dadurch gekennzeichnet, daß die Phosphate und/oder Phosphonate in Form von 1 gew. %igen bis gesättigten wäßrigen Lösungen eingesetzt werden.

**Claims**

1. A process for the preparation of high molecular weight polyphenylene ethers from monohydric phenols which bear alkyl substituents in the two ortho-positions and, possibly, in the meta-position, but not in the para-position, by an oxidative coupling reaction with oxygen at from 15 to 50 °C in the presence of a catalyst complex of a copper salt and an organic amine, and in the presence of 1 to 20 parts by weight of a solvent per part by weight of monomeric phenol, and in the presence or absence of an activator, and by separating off the metal component of the catalyst complex from the reaction mixture, wherein the metal component of the catalyst is separated off, after the polymerization, by the addition of a sodium diphosphate, sodium triphosphate, sodium hexametaphosphate or sodium hydroxyethane diphosphonate.

2. A process as claimed in claim 1, wherein the phosphates and/or phosphonates are used in the form of 1 % strength by weight to saturated aqueous solutions.

**Revendications**

1. Procédé pour la préparation de polyéthers de phénylène de poids moléculaire élevé à partir de phénols monovalents qui présentent des substituants alkyle dans les deux positions ortho et éventuellement en position méta, mais non en position para, par réaction d'enchaînement par oxydation avec de l'oxygène à des températures comprises entre 15 et 50 °C, en présence d'un complexe catalyseur formé d'un sel de cuivre et d'une amine organique et en présence d'un solvant dans la gamme de 1 : 1 à 20 : 1 parties en poids par rapport au phénol monomère et, le cas échéant, d'un activeur et par séparation du complexe catalyseur d'avec le mélange réactionnel, caractérisé en ce qu'à la suite de la polymérisation, le composant métallique du catalyseur est séparé par addition d'un biphosphate de sodium, d'un triphosphate de sodium, d'un hexamétaphosphate de sodium ou d'un hydroxyéthanediphosphonate de sodium.

2. Procédé selon la revendication 1, caractérisé en ce que les phosphates et/ou phosphonates sont introduits sous forme de solutions aqueuses d'une concentration comprise entre 1 % en poids et la saturation.